# EUROPEAN PATENT SPECIFICATION

(11) **EP 4 356 238 B1**
(45) Date of publication and mention of the grant of the patent: **08.04.2026**
(21) Application number: 21734298.9
(22) Date of filing: 14.06.2021
(51) Int. Cl.: G06F 8/65

(54) **HOUSHOLD APPLIANCE FIRMWARE UPDATE**
AKTUALISIERUNG DER FIRMWARE EINES HOUSHOLD-GERÄTS
MISE À JOUR DE MICROLOGICIEL D'APPAREIL ÉLECTROMÉNAGER

(43) Date of publication of application: 24.04.2024
(73) Proprietor: ELECTROLUX APPLIANCES AKTIEBOLAG, 105 45 Stockholm (SE)
(72) Inventor: FABRICI, Lucio, 33080 Porcia PN (IT); TAIARIOL, Mauro, 33080 Porcia PN (IT); PLOS, Livio, 33080 Porcia PN (IT); BIASUTTI, Daniele, 33080 Porcia PN (IT)
(74) Representative: Electrolux Group Patents
(86) International application number: PCT/EP2021/065991
(87) International publication number: WO 2022/262940

(56) References cited:
- US-A1- 2014 344 798

## Description

### Field of the invention

The solution according to embodiments of the present invention generally relates to the household appliance field. More specifically, the solution according to embodiments of the present invention relates to a firmware update system for a household appliance.

### Background of the invention

Modern household appliances are capable of performing a number of different tasks. For this reason, a household appliance is equipped with one or more Printed Circuit Board Assemblies (PCBA) each one comprising one or more processing units (*e.g.*, processors or controllers) adapted to control corresponding electric/electronic components (*e.g*., electronic switches, TRIACs, power transistors, heating resistors, electronic displays) for performing specific functions during the operation of the household appliance.

Each processing unit of a PCBA is configured to control the corresponding electric/electronic components according to a corresponding instructions set (firmware) stored at the processing unit, *e.g.,* in a memory unit of the processing unit. Moreover, the memory units of the processing units may also store configuration data configured to modify a behavior of the stored instruction sets according to a specific model of the household appliance.

In order to upgrade the processing units, for example to add new configurations settings and/or new functionalities, the corresponding firmware and/or the configuration data stored in the memory units are subjected to (*e.g.,* periodical) updates, referred to as "firmware updates".

For the sake of coinciseness, hereinafter, the expressions "instruction set" and "firmware" are to be intended in a broad way, so as to include not only the instruction sets or firmware themselves, but also possible configuration data for the configuration of said instruction set or firmware.

By the same token, hereinafter, the expression "firmware update" is to be intended in a broad way, so as to include an update of the instruction sets or firmware stored in a memory unit of the processing unit and/or an update of the configuration data for said instruction sets or firmware.

In order to carry out a firmware update, new versions of the firmware and/or configuration data that are already installed at the processing units are provided to the household appliance in form of update data packages.

The update data packages may be provided by an external server, and delivered to the household appliance through a communication network, such as the Internet. For this purpose, the household appliance may be provided with a communication unit configured for allowing a data communication between the household appliance and said external server.

By making reference to the so-called Over-The-Air (OTA) firmware update modality, the household appliance receives the update data packages from said external server through a wireless communication link. For example, the communication unit of the household appliance may be configured to establish a wireless (*e.g*., Wi-Fi) communication link with a router, through which a (*e.g.,* Internet) communication link can be established with the external server.

US 2014/344798 discloses a production system including a plurality of controllers that control a plurality of pieces of production equipment, respectively, and a controller management apparatus that manages the plurality of controllers, and relates to upgrade of a version of software for a controller.

### Summary of the Invention

The Applicant has found that the management of firmware updates in form of update data packages wirelessly received by an external server, and especially according to the OTA update modality, is a very critical task, that can be affected by several drawbacks.

The update data packages wirelessly received via Internet may be corrupted or lacking of some parts, for example because of a network malfunctioning during the transmission of the update data packages. In this situation, the firmware update cannot be carried out or, following the conclusion of the firmware update, the correct operation of the household appliance itself may be negatively affected. The installation of the corrupted and/or incomplete update data packages may even totally prevent the operation of the household appliance.

Since household appliances generally comprise a plurality of processing units, serious issues may arise if, as a result of a firmware update following the reception of update data packages, the firmware versions of the various processing unit are not compatible to each other.

Furthermore, having the household appliance be connected to an external data communication network for receiving the update data packages, undesired external events and/or unauthorized household appliance accesses occurring during the firmware update may disrupt the correct outcome of the update and/or the correct operation of the household appliance after the update.

Moreover, known modalities for updating the firmware of household appliances may disadvantageously require a too invasive intervention by a user, and/or causing excessively frequent and/or long interruptions in the normal operation of the household appliance.

The Applicant has therefore faced the problem of avoiding, or at least mitigating the abovementioned drawbacks affecting the known firmware updates.

In particular, one or more aspects of the solution according to specific embodiments of the invention are set out in the independent claims, with advantageous features of the same solution that are indicated in the dependent claims (with any advantageous feature provided with reference to a specific aspect of the solution according to an embodiment of the invention that applies *mutatis mutandis* to any other aspect thereof).

An aspect of the solution according to one or more embodiments of the invention relates to a household appliance.

The household appliance comprises one or more processing units for controlling electrically and/or electronically controllable components of the household appliance according to a corresponding instructions set during a first operating mode of the household appliance.

The household appliance further comprises a communication unit for allowing a data communication between the household appliance and an external server through a communication network.

Each instructions set corresponding to a processing unit is installed at said processing unit.

The communication unit is configured for receiving from the external server an update data distribution comprising, for each instructions set installed at the corresponding processing unit, a corresponding update data package comprising a latest version of said instructions set.

The communication unit is further configured for carrying out the following operations during a second operating mode of the household appliance:
- preventing data communication between the household appliance and the external server;
- providing to each one among a set of selected processing units the corresponding update package, each selected processing unit of the set of selected processing units being selected based on a comparison between a version of the instructions set installed at the corresponding processing unit with the latest version of said instructions set included in the corresponding update package;
wherein:
- each selected processing unit is configured to update the corresponding instructions set installed thereat with the latest version of said instructions set included in the corresponding update package received from the communication unit.

With the expression "preventing data communication between the household appliance and the external server" it is herein preferably meant that the communication between the household appliance and external units - through the communication network - is prevented as a whole.

With the expression "providing to each one among a set of selected processing units the corresponding update package" it is meant that the update packages are sent to a set of selected processing units comprising one or more processing units.

Since data communication between the household appliance and external units is disabled during the firmware update, undesired external events and/or unauthorized accesses to the household appliance are advantageously prevented. In this way, the possibility of disruptions in the the correct outcome of the update and/or in the correct operation of the household appliance after the update are strongly reduced.

Moreover, since the update data distribution received from the external server is a complete and coherent update data set comprising updates for all the instruction sets of all the processing units of the household appliance, it is avoided that the firmware update causes incompatibilities among the operations carried out by different processing units of the household appliance.

According to an embodiment of the present invention, the communication unit is further configured for carrying out during said second operating mode the following operations for each processing unit:
- comparing a version of the instructions set installed at said processing unit with the latest version of said instructions set included in the corresponding update package;
- selecting said processing unit for providing thereto the corresponding update package if the instructions set installed at said processing unit has a version different from (*e.g.,* older than) said latest version.

In this way, only the instruction sets of the processing units having an outdated version are subjected to an update, reducing thus the time required for performing the update.

According to an embodiment of the present invention, the communication unit is configured for receiving from the external server said update data distribution during the first operating mode of the household appliance.

In this way, the downloading of the update data distribution can be advantageously performed in background, while the household appliance is still operating in its standard operating mode.

According to an embodiment of the present invention, the communication unit is configured to verify authenticity and/or integrity of the received update data packages during a package verifying phase of the household appliance.

In this way, it is advantageously avoided the possibility of having incorrect updates caused by received update data packages that are corrupted or lacking of some parts.

According to an embodiment of the present invention, said package verifying phase occurs after said data communication between the household appliance and the external server is prevented.

According to an embodiment of the present invention, said package verifying phase occurs before said second operating mode.

According to an embodiment of the present invention, the received update data packages are protected by means of digital signature through an asymmetric key.

According to an embodiment of the present invention, the communication unit is configured to verify said authenticity and/or integrity of the received update data packages by verifying said digital signature during said package verifying phase of the household appliance through a digital certificate.

According to an embodiment of the present invention, the communication unit is further configured to check the validity of the digital certificate during said package verifying phase of the household appliance.

According to an embodiment of the present invention, each processing unit comprises a respective processing unit memory element configured to store said installed instructions set corresponding to said processing unit.

According to an embodiment of the present invention, the communication unit comprises a communication unit memory element configured to store the received update data distribution comprising said update data packages.

According to an embodiment of the present invention, said communication unit memory element is further configured to store a backup data distribution comprising a current version of the instructions set installed at the processing units.

According to an embodiment of the present invention, the communication unit is configured to store into the communication unit memory element a new backup data distribution in the place of a previously stored backup data distribution after that each selected processing unit has updated the corresponding instructions set.

According to an embodiment of the present invention, said new backup data distribution corresponds to the received update data distribution comprising said update data packages exploited by the selected processing units for updating the corresponding instructions sets.

In this way, there is no need of carrying out further operations (*e.g*., a dedicated backup download from the external server) because the update distribution is already stored in the household appliance.

According to an embodiment of the present invention, said one or more processing units are prevented from controlling said electrically and/or electronically controllable components of the household appliance during said second operating mode.

In this way, dangerous interactions among processing units having different and not compatible firmware versions (caused by a not yet concluded update) are advantageously prevented.

According to an embodiment of the present invention, the household appliance is configured to switch from the second operating mode to the first operating mode after that each selected processing unit has updated the corresponding instructions set.

According to an embodiment of the present invention, said household appliance is a selected one among:
- a laundry machine configured to wash and/or dry laundry;
- a dishwasher;
- a oven;
- a refrigerator;
- a cooking hob.

### Brief description of the annexed drawings

These and other features and advantages of the present invention will be made apparent by the following description of some exemplary and non limitative embodiments thereof; for its better intelligibility, the following description should be read making reference to the attached drawings, wherein:
**Figure 1** schematically illustrates a household appliance wherein concepts according to the embodiments of the present invention can be applied;
**Figure 2** illustrates an exemplary arrangement of firmware stored in the memory units of processing units of the household appliance of **Figure 1** according to an embodiment of the present invention;
**Figures 3A-3F** depict a flow chart describing the operations carried out by the household appliance for updating the firmware stored in the memory units of **Figure 2** according to an embodiment of the present invention.

### Detailed description of preferred embodiments of the invention

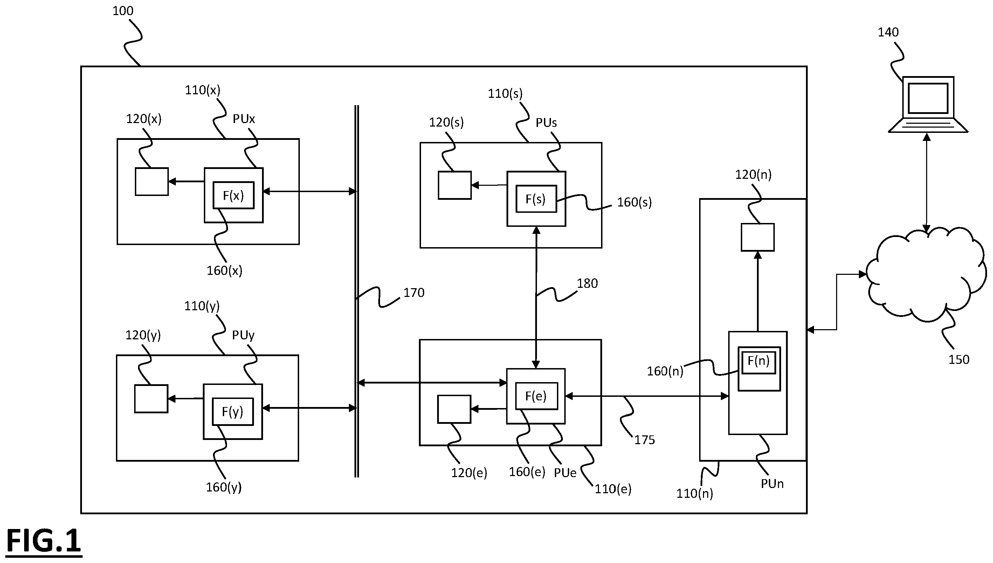

With reference to the drawings, **Figure 1** schematically illustrates in terms of functional blocks a household appliance **100** wherein concepts according to the embodiments of the present invention can be applied.

The household appliance **100** may be for example a laundry machine configured to wash and/or dry laundry, a dishwasher, an oven, a refrigerator, or a cooking hob. However, it is underlined that the concepts of the present invention can be also applied to other kinds of household appliances not included in the abovementioned exemplary list.

According to an embodiment of the present invention, the household appliance **100** comprises one or more PCBA each one comprising one or more processing units (*e.g*., processors or controllers) adapted to control corresponding electric/electronic components of the household appliance **100** for performing specific functions during the operation of the household appliance **100.**

In the exemplary case illustrated in **Figure 1****,** the household appliance **100** comprises:
- a PCBA **110(x)** comprising a processing unit **PUx** configured to control a component **120(x);**
- a PCBA **110(y)** comprising a processing unit **PUy** configured to control a component **120(y);**
- a PCBA **110(e)** comprising a processing unit **PUe** configured to control a component **120(e);**
- a PCBA **110(s)** comprising a processing unit **PUs** configured to control a component **120(s).**

According to a first non-limitative example in which the household appliance **100** is a laundry machine configured to wash laundry, the component **120(x)** may be an electronic switch for the selective opening/closing of a hydraulic valve, the component **120(y)** may be a heating resistor for heating washing liquid, the component **120(e)** may be a user interface, and the component **120(s)** may be a graphic display unit.

According to a second non-limitative example in which the household appliance **100** is an oven, the component **120(x)** may be a heating resistor for heating a cooking cavity of the oven, the component **120(y)** may be a TRIAC for the control of an oven fan, the component **120(e)** may be a user interface, and the component **120(s)** may be a graphic display unit.

According to a third non-limitative example in which the household appliance **100** is a refrigerator, the component **120(x)** may be a TRIAC for the control of refrigerator liquid compressor, the component **120(y)** may be a TRIAC for the control of a refrigerator fan, the component **120(e)** may be a user interface, and the component **120(s)** may be a graphic display unit.

Generally, the concepts of the present invention can be applied to a wide range of different household appliances comprising a wide range of different electric/electronic components including for example electronic switches, TRIACs, power transistors, heating resistors, electronic displays.

According to an embodiment of the present invention, the household appliance **100** further comprises a communication unit **110(n)** configured to allow data communication between the household appliance **100** and an external server **140** trough a communication network **150,** such as the internet.

According to a first example, the communication unit **110(n)** is configured to establish a Wi-Fi communication link with a router (not illustrated in figure) configured in turn to establish communication with the communication network **150.**

According to a further example, the communication unit **110(n)** is configured to establish a wireless communication link with the communication network **150** by exploiting a mobile communication network (not illustrated in figure).

According to an embodiment of the invention, the communication unit **110(n)** comprises a processing unit **PUn** configured to control hardware components **120(n)** of the communication unit **110(n).**

According to an embodiment of the present invention, each of the processing units **PUx, PUy, PUe, PUs** and **PUn** is configured to control the corresponding components **120(x), 120(y), 120(e), 120(s)** and **120(n)** during a first operating mode of the household appliance **100** according to (portions of) a corresponding instructions set (firmware) **F(x), F(y), F(e), F(s)** and **F(n)** stored in a corresponding memory unit **160(x), 160(y), 160(e), 160(s)** and **160(n),** respectively, of said processing unit. It is pointed out that by "first operating mode" it is herein intended a "standard" operating mode of the household appliance **100,** during which the household appliance **100** is performing its normal functions. In line with what has been already stated in the introduction part of the present document, hereinafter, said firmware **F(x), F(y), F(e), F(s)** and **F(n)** has to be intended to comprise also possible configuration data for the configuration of the firmware itself.

According to an embodiment of the present invention, the PCBAs **110(x), 110(y), 110(e)** are coupled to a same data bus **170** for allowing exchange of data among the processing units **PUx, PUy** and **PUe.**

According to an embodiment of the present invention, when the household appliance **100** is operating in the first operating mode, the data bus **170** is accessed by the processing units **PUx, PUy** and **PUe** according to a peer-to-peer communication protocol, such as for example the Major Appliance Communication System ("MACS") communication protocol employed in most of the household appliances sold by the Applicant of the present patent application.

According to an embodiment of the present invention, the PCBA **110(e)** and the communication unit **110(n)** are connected through a data bus **175** for allowing exchange of data between the processing units **PUe** and **PUn.**

According to an embodiment of the present invention, when the household appliance **100** is operating in the first operating mode, the data bus **175** is accessed by the processing units **PUe, Pun** according to a point-to-point communication protocol, such as for example the HACL communication protocol.

According to an embodiment of the present invention, the PCBAs **110(e)** and **110(s)** are connected through a data bus **180** for allowing exchange of data between the processing units **PUe, PUs.**

The arrangement of the PCBAs of the household appliance **100** is such that the only way to access the (external) communication network **150** (and therefore, the external server **140)** is through the communication unit **110(n).**

It is pointed out that the concepts of the present invention can be generally applied to a household appliance **100** comprising a different number of PCBAs, which can be connected to each other with a different arrangement, as long as the communication with the (external) communication network **150** is through the communication unit **110(n).**

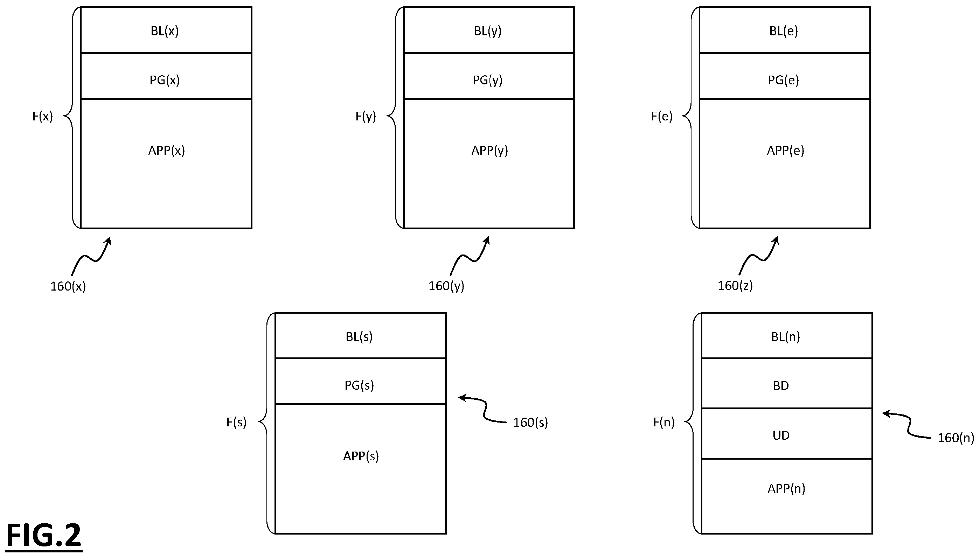

**Figure 2** illustrates in terms of simplified functional blocks an exemplary arrangement of the firmware **F(x), F(y), F(e), F(s), F(n)** stored in the memory units **160(x), 160(y), 160(e), 160(s), 160(n)** of the processing units **PUx, PUy, PUe, PUs, PUn** according to an embodiment of the present invention.

According to an embodiment of the present invention, each firmware **F(x), F(y), F(e), F(s), F(n)** comprises a corresponding bootloader firmware portion **BL(x), BL(y), BL(e), BL(s), BL(n)** (hereinafter, simply referred to as "bootloader") that is configured to run at the startup of the respective processing unit **PUx, PUy, PUe, PUs, PUn.**

According to an embodiment of the present invention, each firmware **F(x), F(y), F(e), F(s), F(n)** further comprises a corresponding application firmware portion **APP(x), APP(y), APP(e), APP(s), APP(n)** (hereinafter, simply referred to as "application") comprising an instructions set used by the respective processing unit **PUx, PUy, PUe, PUs, PUn** during the first operating mode of the household appliance **100** for controlling the corresponding component(s) **120(x), 120(y), 120(e), 120(s)** and **120(n).** It is pointed out that the application firmware portion (or simply "application") **APP(x), APP(y), APP(e), APP(s), APP(n)** is herein meant to include, in addition to the instructions set used by the respective processing unit **PUx, PUy, PUe, PUs, PUn,** also possible configuration data for the configuration of said instruction set.

According to an embodiment of the present invention, the bootloader **BL(x), BL(y), BL(e), BL(s), BL(n)** is the first portion of the firmware **F(x), F(y), F(e), F(s), F(n)** that runs at the startup of the respective processing unit **PUx, PUy, PUe, PUs, PUn.** If the activation of the bootloader **BL(x), BL(y), BL(e), BL(s), BL(n)** is not forced before a time-out is elapsed, the processing unit **PUx, PUy, PUe, PUs, PUn** starts to run the application **APP(x), APP(y), APP(e), APP(s), APP(n).** When instead the bootloader **BL(x), BL(y), BL(e), BL(s), BL(n)** is activated, plugins extending the features of the bootloader **BL(x), BL(y), BL(e), BL(s), BL(n)** can be loaded and activated.

Plugins for the bootloaders **BL(x), BL(y), BL(e), BL(s)** have been identified in **Figure 2** with references **PG(x), PG(y), PG(e), PG(s).** Example of plugins comprise a so-called "flashloader" configured to open the possibility to erase stored data and/or write new received data, and a so-called "bridge" configured to create a bidirectional link between a serial line used by the bootloader and another serial line.

As will be described in greater detail in the following, according to an embodiment of the present invention, during a second operating mode of the household appliance **100,** also referred to as "update mode", the firmware **F(x), F(y), F(e), F(s), F(n)** stored in the memory units **160(x), 160(y), 160(e), 160(s), 160(n)** of the processing units **PUx, PUy, PUe, PUs, PUn** may be updated with a new version thereof provided by the external server **140.**

On this regard, according to an embodiment of the present invention, the memory unit **160(n)** of the processing unit **PUn** is further configured to store a firmware update data distribution **UD** (hereinafter, simply referred to as "update distribution") received from the external server **140.** The update distribution **UD** is a distribution comprising, for each application **APP(x), APP(y), APP(e), APP(s), APP(n)** installed in the memory units **160(x), 160(y), 160(e), 160(s), 160(n)** of the processing units **PUx, PUy, PUe, PUs, PUn,** one or more corresponding firmware update data packages (hereinafter, simply referred to as "update packages *UP*") comprising a last (updated) version of said application **APP(x), APP(y), APP(e), APP(s), APP(n)** to be installed in place of the currently installed one.

According to an embodiment of the present invention, the memory unit **160(n)** of the processing unit **PUn** is further configured to store a firmware backup data distribution **BD** (hereinafter, simply referred to as "backup distribution"). The backup distribution **BD** is a distribution comprising a copy of the current version of the applications **APP(x), APP(y), APP(e), APP(s), APP(n),** that can be used to restore the correct operation of the household appliance **100** in case something went wrong in the update carried out during the second operating mode of the household appliance **100.**

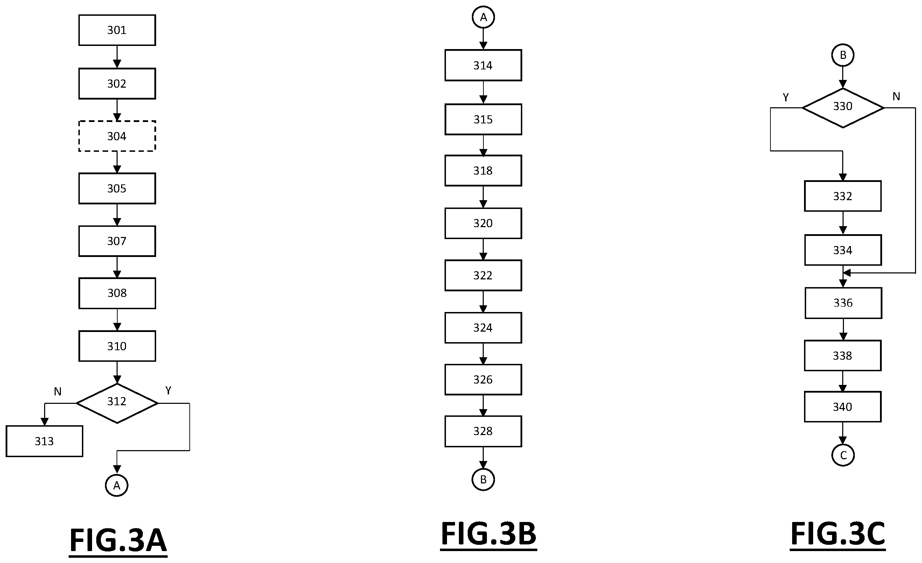

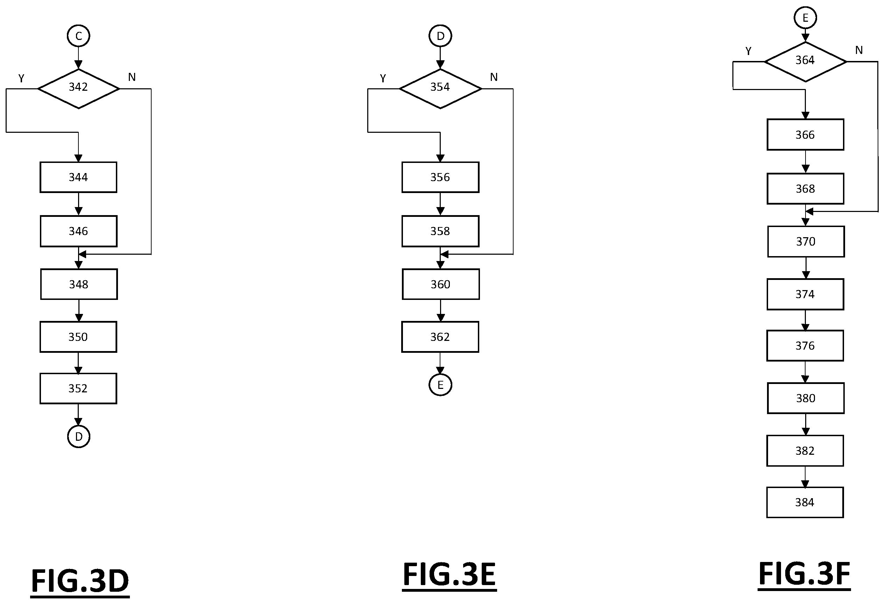

**Figures 3A-3F** depict a flow chart describing the operations carried out by the household appliance **100** for updating the firmware **F(x), F(y), F(e), F(s)** stored in the memory units **160(x), 160(y), 160(e), 160(s)** of the processing units **PUx, PUy, PUe, PUs** according to an embodiment of the present invention.

At the beginning of the flow chart illustrated in **Figures 3A-3F****,** the household appliance **100** is operating in the first operating mode, with the processing units **PUx, PUy, PUe, PUs, PUn** that are configured to control the corresponding component(s) **120(x), 120(y), 120(e), 120(s), 120(n)** according to the applications **APP(x), APP(y), APP(e), APP(s), APP(n).** In other words, the operations described in the flow chart carried out when the household appliance **100** is in the first operating mode are carried out in background, without affecting the standard operation of the household appliance **100.**

According to an embodiment of the present invention, the processing unit **PUn** (*e.g.*, periodically) interrogates the external server **140** through the communication network **150** about the availability of a firmware update (block **301).**

When a new firmware update is available, the processing unit **PUn** downloads from the external server **140** an update distribution **UD** and stores it in the memory unit **160(n)** (block **302).**

According to an embodiment of the present invention, the update distribution **UD** received from the external server **140** is a complete update distribution, *i.e.,* it comprises update packages for all the applications **APP(x), APP(y), APP(e), APP(s)** of the processing units **PUx, PUy, PUe, PUs,** even for those applications whose version is already the latest one. As will be described in detail the following, according to an embodiment of the present invention, even if the downloaded update distribution **UD** comprises update packages *UP* for all the applications **APP(x), APP(y), APP(e), APP(s),** the update procedure will involve the actual updating of only those applications **APP(x), APP(y). APP(e), APP(s)** having a version different from *(e.g.,* older than) the one included in the respective update packages *UP* of the update distribution **UD.**

According to an embodiment of the present invention, if no backup distribution **BD** is already stored in the memory unit **160(n)** form a previous update, a new backup distribution **BD** is downloaded from the external server and stored in the memory unit **160(n)** (block **304**).

According to an embodiment of the present invention, the processing unit **PUn** asks a user of the household appliance **100** for the approval of carrying out an update using the downloaded update distribution **UD** (block **305**).

According to an embodiment of the present invention, once the approval is received, the processing unit **PUe** forces a reboot of the processing unit **PUn** (block **307**).

According to an embodiment of the present invention, the bootloader **BL(n)** is then activated, and the processing unit **PUn** disables communication between the household appliance **100** and the external communication network **150**, preventing thus data communication between the household appliance 1**0**0 and the external server **140** (block **308**), for example by deactivating the components **120(n)** (*e.g.,* a Wi-Fi module) of the communication unit **110(n)** responsible of establishing a communication link with the external communication network **150.**

In this way, undesired external events and/or unauthorized accesses to the household appliance **100** are advantageously prevented during the following update operations, increasing the reliability of the outcome of the update.

According to an embodiment of the present invention, the processing unit **PUn** carries out a package verifying phase on the update packages *UP* of the update distribution **UD** (block **310**).

According to an embodiment of the present invention, the package verifying phase provides for verifying the integrity of the received update distribution **UD,** in order to avoid that the update is carried out based on a corrupted or incomplete update distribution **UD,** caused for example by a possible incomplete reception of the update packages *UP* and/or by the corruption of the latter.

According to an embodiment of the present invention, the package verifying phase further provides for verifying the authenticity of the received update packages *UP.*

According to an embodiment of the invention, the update packages *UP* received by the processing unit **PUn** are protected by means of digital signature, for example through an asymmetric key.

According to an embodiment of the present invention, the package verifying phase provides that the processing unit **PUn** verifies the digital signature protecting the update packages *PU* exploiting a digital certificate. According to an advantageous embodiment of the present invention, the package verifying phase further provides that the processing unit **PUn** checks the validity of said digital certificate.

According to an embodiment of the present invention, the package verifying phase is also carried out for verifying authenticity and/or integrity of the backup distribution **BD.**

According to an embodiment of the present invention, if the outcome of the package verifying phase is negative (exit branch **N** of block **312**), for example because the update distribution **UD** has been assessed to be corrupted or incomplete, and/or because the assessment of the authenticity of the received update packages *UP* has given a negative outcome, the update procedure is aborted (block **313**).

According to an embodiment of the present invention, if the outcome of the package verifying phase is positive (exit branch **Y** of block **312**), the household appliance **100** switches from the first operating mode to the second operating mode by having the processing unit **PUe** disable the applications **APP(x), APP(y), APP(e), APP(s)** of the processing units **PUx, PUy, PUe, PUs** (block **314**).

In this way, the following update operations are carried out with the household appliance **100** that is a configuration in which the processing units **PUx, PUy, PUe, PUs** are prevented from controlling the corresponding component(s) **120(x), 120(y), 120(e), 120(s).** In other words, while the operations up to block **312** are carried out in background, with the household appliance **100** that is still able to actively control the various component(s) **120(x), 120(y), 120(e), 120(s)** thereof in a standard way, once the household appliance **100** is switched to the second operating mode, the normal operation of the household appliance **100** is prevented.

Moreover, as long as the household appliance **100** is in the second operating mode, the processing units **PUx, PUy, PUs** are prevented to interact with each other.

According to an embodiment of the present invention, once the applications **APP(x), APP(y), APP(e), APP(s)** of the processing units **PUx, PUy, PUe, PUs** have been disabled, the processing unit **PUe** reboots itself, activating its bootloader **BL(e),** and then, it forces another reboot of the processing unit **PUn,** activating again its bootloader **BL(n)** (block **315**).

Then, according to an embodiment of the present invention, the processing unit **PUn** sends a first plugin *PGB1(e)* to the processing unit **PUe** through the data bus **175** (block **318**). According to an embodiment of the present invention, the sending of the first plugin *PGB1(e)* is carried out according to a point-to-point communication protocol, such as for example the Domestic Appliance Acquisition System ("DAAS") communication protocol. According to an embodiment of the present invention, the first plugin *PGB1(e)* is a plugin of the "bridge" type, configured to set up a bidirectional link between the processing unit **PUe** and the processing unit **PUs** over the data bus **180.** The first plugin *PGB1(e)* received by the bootloader **BL(e)** is then loaded by the bootloader **BL(e)** of the processing unit **PUe** and then it is activated.

According to an embodiment of the present invention, the processing unit **PUn** forces a reboot of the processing unit **PUs** by sending to the processing unit **PUe** a reboot message (block **320**). Since the processing unit **PUe** has its bootloader **BL(e)** that is activated with the first plugin *PGB1(e),* the reboot message received by the processing unit **PUe** from the processing unit **PUn** is routed to the processing unit **PUs,** forcing the reboot of the latter, and the activation of its bootloader **BL(s).**

Then, according to an embodiment of the present invention, the processing unit **PUn** sends a second plugin *PGB2(e)* to the processing unit **PUe** through the data bus **175** (block **322**). According to an embodiment of the present invention, the sending of the second plugin *PGB2(e)* is carried out according to a point-to-point communication protocol, such as for example the DAAS communication protocol. According to an embodiment of the present invention the second plugin *PGB2(e)* is a plugin of the "bridge" type, configured to set up a bidirectional link between the processing unit **PUe** and the data bus **170.** The Second plugin *PGB2(e)* received by the bootloader **BL(e)** is then loaded by the bootloader **BL(e)** of the processing unit **PUe** and then it is activated.

According to an embodiment of the present invention, the processing unit **PUn** forces a reboot of the processing units **PUx** and **PUy** by sending to the processing unit **PUe** a reboot message (block **324**). Since the processing unit **PUe** has its bootloader **BL(e)** that is activated with the second plugin *PGB2(e),* the reboot message received by the processing unit **PUe** from the processing unit **PUn** is routed on the data bus **170,** and received by the processing units **PUx** and **Puy,** which are therefore forced to reboot themselves, causing in turn the activation of the bootloaders **BL(x), BL(y).**

At this point, according to an embodiment of the present invention, the processing unit **PUn** selects a first processing unit to be updated among the processing units **PUx, PUy** connected to the data bus, such as the processing unit **PUx** (block **326**). According to an embodiment of the present invention, this selection is carried out by sending a selection message *S(IDx)* containing an identifier *IDx* of the processing unit **PUx** to the processing unit **PUe.** Since the processing unit **PUe** has its bootloader **BL(e)** that is activated with the second plugin *PGB2(e),* the selection message *S(IDx)* is routed on the data bus **170** according to a point-to-point communication protocol, such as for example the DAAS communication protocol. The processing unit connected to the data bus **170** having an identifier matching the identifier included in the message *S(IDx)* - in this case, the processing unit **PUx** - replies back by sending an acknowledge message *ACK* to the processing unit **PUn.**

According to an embodiment of the present invention, the processing unit **PUn** sends to the selected processing unit **PUx** a request to obtain a version identifier *VI(x)* identifying the version of the firmware **F(x)** - and particularly of the application **APP(x)** - actually stored and installed in the memory unit **160(x),** and the processing unit **PUx** replies by providing the requested version identifier *VI(x)* to the processing unit **PUn** (block **328**).

Then, according to an embodiment of the present invention, the processing unit **PUn** extracts from the downloaded update distribution **UD** a version identifier *VD(x)* identifying the version of the update packages *UP* of the update distribution **UD** corresponding to the application **APP(x),** and compares the two version identifiers *VI(x), VD(x).*

If the version identifier *VI(x)* is different from the version identifier *VD(x)* (exit branch **Y** of block **330**), it means that the version of the firmware **F(x)** - and particularly of the application **APP(x)** - actually stored and installed in the memory unit **160(x)** is not the same as *(e.g.,* is older than) the version of the firmware received with the update distribution **UD.**

In this case, according to an embodiment of the present invention, the processing unit **PUn** sends a plugin *PGF(x)* of the "flashloader" type to the selected processing unit **PUx** (block **332**) according to a point-to-point communication protocol, such as for example the DAAS communication protocol. Particularly, according to an embodiment of the present invention, in order to send the plugin *PGF(x)* to the selected processing unit **PUx,** the plugin *PGF(x)* is firstly sent to the processing unit **PUe.** Since the processing unit **PUe** has its bootloader **BL(e)** that is activated with the second plugin *PGB2(e),* the plugin *PGF(x)* received by the processing unit **PUe** from the processing unit **PUn** is routed to the selected processing unit **PUx.** Then, the plugin *PGF(x)* is activated, so that the processing unit **PUx** is switched to a configuration in which it is ready to erase its firmware **F(x)** and overwrite it with an updated version thereof. According to an embodiment of the present invention, the processing unit **PUn** drives the processing unit **PUx** to rewrite its firmware **F(x)** - and particularly the application **APP(x)** - with an updated version thereof extracted from update packages *UP* of the downloaded update distribution **UD** (block **334**). According to an embodiment of the present invention, this operation is carried out by having the processing unit **PUn** sends to the processing unit **PUx** a rewrite command *WR(x)* together with the updated version of the firmware extracted from the update packages *UP* through the processing unit **PUe** and exploiting a point-to-point communication protocol, such as for example the DAAS communication protocol. Once the firmware **F(x)** - and particularly the application **APP(x)** - of the processing unit **PUx** is rewritten using the updated version thereof, the processing unit **PUn** disables the plugin *PGF(x).* Then, the processing unit **PUn** deselects the processing unit **PUx** (block **336**).

If the version identifier *VI(x)* is instead the same of the version identifier *VD(x)* (exit branch **N** of block **330**), it means that the version of the firmware **F(x)** - and particularly of the application **APP(x)** - actually stored and installed in the memory unit **160(x)** is the same of the version of the firmware received with the update distribution **UD,** and therefore the firmware **F(x)** of the processing unit **PUx** does not require to be updated.

In this case, according to an embodiment of the present invention, the processing unit **PUn** directly deselects the processing unit **PUx** (block **336**).

At this point, according to an embodiment of the present invention, the processing unit **PUn** selects the processing unit **PUy** (block **338**). According to an embodiment of the present invention, this selection is carried out by sending a selection message *S(IDy)* containing an identifier *IDy* of the processing unit **PUy** to the processing unit **PUe.** Since the processing unit **PUe** has its bootloader **BL(e)** that is activated with the second plugin *PGB2(e),* the selection message *S(IDy)* is routed on the data bus **170** according to a point-to-point communication protocol, such as for example the DAAS communication protocol. The processing unit connected to the data bus **170** having an identifier matching the identifier included in the message *S(IDy)* - in this case, the processing unit **PUy** - replies back by sending an acknowledge message *ACK* to the processing unit **PUn.**

According to an embodiment of the present invention, the processing unit **PUn** sends to the selected processing unit **PUy** a request to obtain a version identifier *VI(y)* identifying the version of the firmware **F(y)** - and particularly of the application **APP(y) -** actually stored and installed in the memory unit **160(y),** and the processing unit **PUy** replies by providing the requested version identifier *VI(y)* to the processing unit **PUn** (block **340**).

Then, according to an embodiment of the present invention, the processing unit **PUn** extracts from the downloaded update distribution **UD** a version identifier *VD(y)* identifying the version of the update packages *UP* of the update distribution **UD** corresponding to the application **APP(y)** and compares the two version identifiers *VI(y), VD(y).*

If the version identifier *VI(y)* is different from the version identifier *VD(y)* (exit branch **Y** of block **342**), it means that the version of the firmware **F(y)** - and particularly of the application **APP(y)** - actually stored and installed in the memory unit **160(y)** is different from *(e.g.,* older than) the version of the firmware received with the update distribution **UD.**

In this case, according to an embodiment of the present invention, the processing unit **PUn** sends a plugin *PGF(y)* of the "flashloader" type to the selected processing unit **PUy** (block **344**) according to a point-to-point communication protocol, such as for example the DAAS communication protocol. According to an embodiment of the present invention, in order to send the plugin *PGF(y)* to the selected processing unit **PUy,** the plugin *PGF(y)* is firstly sent to the processing unit **PUe.** Since the processing unit **PUe** has its bootloader **BL(e)** that is activated with the second plugin *PGB2(e),* the plugin *PGF(y)* received by the processing unit **PUe** from the processing unit **PUn** is routed to the selected processing unit **PUy.** Then, the plugin *PGF(y)* is activated, so that the processing unit **PUy** is switched to a configuration in which it is ready to erase its firmware **F(y)** and overwrite it with an updated version thereof. According to an embodiment of the present invention, the processing unit **PUn** drives the processing unit **PUy** to rewrite its firmware **F(y)** - and particularly the application **APP(y)** - with an updated version thereof extracted from update packages *UP* of the downloaded update distribution **UD** (block **346**). According to an embodiment of the present invention, this operation is carried out by having the processing unit **PUn** sends to the processing unit **PUy** a rewrite command WR(y) together with the updated version of the firmware extracted from the update packages *UP* through the processing unit **PUe** and exploiting a point-to-point communication protocol, such as for example the DAAS communication protocol. Once the firmware **F(y)** - and particularly the application **APP(y)** - of the processing unit **PUy** is rewritten using the updated version thereof, the processing unit **PUn** disables the plugin *PGF(y).* Then, the processing unit **PUn** deselects the processing unit **PU7** (block **348**).

If the version identifier *VI(y)* is instead the same of the version identifier *VD(y)* (exit branch **N** of block **342**), it means that the version of the firmware **F(y)** - and particularly of the application **APP(y)** - actually stored and installed in the memory unit **160(y)** is the same of the version of the firmware received with the update distribution **UD,** and therefore the firmware **F(y)** of the processing unit **PUy** does not require to be updated.

In this case, according to an embodiment of the present invention, the processing unit **PUn** directly deselects the processing unit **PUy** (block **348**).

Then, according to an embodiment of the present invention, the processing unit **PUn** drives the processing unit **PUe** so as to deactivate the second plugin *PGB2(e)* and activate the first plugin *PGB(1)* (block **350**).

At this point, according to an embodiment of the present invention, the processing unit **PUn** sends to the processing unit **PUs** a request to obtain a version identifier *VI(s)* identifying the version of the firmware **F(s)** - and particularly of the application **APP(s)** - actually stored and installed in the memory unit **160(s),** and the processing unit **PUs** replies by providing the requested version identifier *VI(s)* to the processing unit **PUn** (block **352**). According to an embodiment of the present invention, the request directed to the processing unit **PUs** is sent by the processing unit **PUn** to the processing unit **PUe.** Since the processing unit **PUe** has its bootloader **BL(e)** that is activated with the first plugin *PGB1(e),* the request is routed on the data bus **180** according to a point-to-point communication protocol, such as for example the DAAS communication protocol.

Then, according to an embodiment of the present invention, the processing unit **PUn** extracts from the downloaded update distribution **UD** a version identifier *VD(s)* identifying the version of the update packages *UP* of the update distribution **UD** corresponding to the application **APP(s)** and compares the two version identifiers *VI(s), VD(s).*

If the version identifier *VI(s)* is different from the version identifier *VD(s)* (exit branch **Y** of block **354**), it means that the version of the firmware **F(s)** - and particularly of the application **APP(s)** - actually stored and installed in the memory unit **160(s)** is different from *(e.g.,* older than) the version of the firmware received with the update distribution **UD.**

In this case, according to an embodiment of the present invention, the processing unit **PUn** sends a plugin *PGF(s)* of the "flashloader" type to the processing unit **PUs** (block **356**) according to a point-to-point communication protocol, such as for example the DAAS communication protocol. According to an embodiment of the present invention, in order to send the plugin *PGF(s)* to the processing unit **PUs,** the plugin *PGF(s)* is firstly sent to the processing unit **PUe.** Since the processing unit **PUe** has its bootloader **BL(e)** that is activated with the first plugin *PGB1(e),* the plugin *PGF(s)* received by the processing unit **PUe** from the processing unit **PUn** is routed to the processing unit **PUe.** Then, the plugin *PGF(s)* is activated, so that the processing unit **PUs** is switched to a configuration in which it is ready to erase its firmware **F(s)** and overwrite it with an updated version thereof. According to an embodiment of the present invention, the processing unit **PUn** drives the processing unit **PUs** to rewrite its firmware **F(s)** - and particularly the application **APP(s)** - with an updated version thereof extracted from update packages *UP* of the downloaded update distribution **UD** (block **358**). According to an embodiment of the present invention, this operation is carried out by having the processing unit **PUn** send to the processing unit **PUs** a rewrite command *WR(s)* together with the updated version of the firmware extracted from the update packages *UP* through the processing unit **PUe** and exploiting a point-to-point communication protocol, such as for example the DAAS communication protocol. Once the firmware **F(s)** - and particularly the application **APP(s)** - of the processing unit **PUs** is rewritten using the updated version thereof, the processing unit **PUn** disables the plugin *PGF(s),* and then disables the plugin *PGB1(e)* (block **360**).

If the version identifier *VI(s)* is instead the same of the version identifier *VD(s)* (exit branch **N** of block **354**), it means that the version of the firmware **F(s)** - and particularly of the application **APP(s)** - actually stored and installed in the memory unit **160(s)** is the same of the version of the firmware received with the update distribution **UD,** and therefore the firmware **F(s)** of the processing unit **PUs** does not require to be updated.

In this case, according to an embodiment of the present invention, the processing unit **PUn** directly disables the plugin *PGB1(e)* (block **360**).

The processing unit **PUe** is now in a configuration without plugins of the "bridge" type activated. Therefore, the messages sent by the processing unit **PUn** are now received by the processing unit **PUe** as a final recipient (the messages being no more further routed to other processing units).

According to an embodiment of the present invention, the processing unit **PUn** sends to the processing unit **PUe** a request to obtain a version identifier *VI(e)* identifying the version of the firmware **F(e)** - and particularly of the application **APP(e)** - actually stored and installed in the memory unit **160(e),** and the processing unit **PUe** replies by providing the requested version identifier *VI(e)* to the processing unit **PUn** (block **362**). According to an embodiment of the present invention, the request is sent according to a point-to-point communication protocol, such as for example the DAAS communication protocol.

Then, according to an embodiment of the present invention, the processing unit **PUn** extracts from the downloaded update distribution **UD** a version identifier *VD(e)* identifying the version of the update packages *UP* of the update distribution **UD** corresponding to the application **APP(e)** and compares the two version identifiers *VI(e, VD(e).*

If the version identifier *VI(e)* is different from the version identifier *VD(e)* (exit branch **Y** of block **364**), it means that the version of the firmware **F(e)** - and particularly of the application **APP(e)** - actually stored and installed in the memory unit **160(e)** is different from *(e.g.,* older than) the version of the firmware received with the update distribution **UD.**

In this case, according to an embodiment of the present invention, the processing unit **PUn** sends a plugin *PGF(e)* of the "flashloader" type to the processing unit **PUe** (block **366**) according to a point-to-point communication protocol, such as for example the DAAS communication protocol. Then, the plugin *PGF(e)* is activated, so that the processing unit **PUn** is switched to a configuration in which it is ready to erase its firmware **F(e)** and overwrite it with an updated version thereof. According to an embodiment of the present invention, the processing unit **PUn** drives the processing unit **PUs** to rewrite its firmware **F(e)** - and particularly the application **APP(e)** - with an updated version thereof extracted from update packages *UP* of the downloaded update distribution **UD** (block **368**). According to an embodiment of the present invention, this operation is carried out by having the processing unit **PUn** sends to the processing unit **PUe** a rewrite command *WR(e)* together with the updated version of the firmware extracted from the update packages *UP* exploiting a point-to-point communication protocol, such as for example the DAAS communication protocol. Once the firmware **F(e)** - and particularly the application **APP(e)** - of the processing unit **PUe** is rewritten using the updated version thereof, the processing unit **PUn** disables the plugin *PGF(e)* (block **370**).

If the version identifier *VI(e)* is instead the same of the version identifier *VD(e)* (exit branch **N** of block **364**), it means that the version of the firmware **F(e)** - and particularly of the application **APP(e)** - actually stored and installed in the memory unit **160(e)** is the same of the version of the firmware received with the update distribution **UD,** and therefore the firmware **F(e)** of the processing unit **PUe** does not require to be updated.

In this case, according to an embodiment of the present invention, the processing unit **PUn** directly disables the plugin *PGF(e)* (block **370**).

At this point, the processing units **PUx, PUy, PUe, PUs** have installed the last (newest) available version of the firmware **F(x), F(y), F(e), F(s).**

Therefore, according to an embodiment of the present invention, the household appliance **100** can be switched back to the first operating mode so that the processing units are enabled to control the corresponding component(s) **120(x), 120(y), 120(e), 120(s)** exploiting the last available version of the firmware **F(x), F(y), F(e), F(s).**

For this purpose, according to an embodiment of the present invention, the processing unit **PUn** forces again the reboot of the processing units **PUx, PUy, PUs** while the processing unit **PUe** reboot itself (block **374**). These reboots are performed without causing the activation of the corresponding bootloaders **BL(x), BL(y), BL(e), BL(s),** and are followed by an enabling of the corresponding applications **APP(x), APP(y), APP(e), APP(s)** (block **376**).

Then, according to an embodiment of the present invention, the processing unit **PUn** is rebooted without causing the activation of the corresponding bootloader **BL(n),** and the processing unit **PUn** enables again communication between the household appliance **100** and the external communication network **150,** allowing thus data communication between the household appliance **100** and the external server **140** (block **382**), for example by activating again the components **120(n)** *(e.g.,* a Wi-Fi module) of the communication unit **110(n)** responsible of establishing a communication link with the external communication network **150.**

At this point, according to an embodiment of the present invention, the processing unit **PUn** is configured to store in the memory unit **160(n)** a new backup distribution **BD** in the place of the already stored one (block **384**).

It is pointed out that the operations carried out by the household appliance **100** for updating the firmware **F(x), F(y). F(e), F(s)** according to the embodiments of the invention described above provide that the household appliance **110** receives a complete update distribution **UD** comprising update packages *UP* for all the firmware **F(x), F(y), F(e), F(s)** of the processing units **PUx, PUy, PUe, PUs,** but the actual update through rewriting of the firmware is carried out (possibly, only) for a set *(e.g.,* a subset) of the processing units, *i.e.,* only for selected processing units having a firmware version different from *(e.g.,* older than) the one contained in the update packages *UP* of the received update distribution **UD.**

Moreover, since the update distribution **UD** received from the external server **140** comprises the update packages *UP* for all the firmware **F(x), F(y), F(e), F(s)** of the processing units **PUx, PUy, PUe, PUs,** said update distribution **UD** may also be exploited as a new backup distribution **BD.** This is particularly advantageous, since it does not require further operations because the update distribution **UD** is already stored in the memory unit **160(n)** of the processing unit **PUn.**

It is pointed out that although in the present description reference has been made to a very specific example in which the processing unit **PUn** of the communication unit **110(n)** is connected to a single processing unit **PUe,** and all the other processing units **PUx, PUy, PUs** are connected to said processing unit **PUe** (the processing units **PUx, PUy** through the data bus **170,** the processing unit **PUs** through the data bus **180**), the concepts of the present invention can be directly applied to different arrangements, in which the number of processing units is different and/or the processing units are connected to each other in a different way.

Moreover, while in the embodiments of the invention described above the update involved only the firmware **F(x), F(y), F(e), F(s)** of the processing units **PUx, PUy, PUe, PUs,** the concepts of the present invention can be directly applied also to cases in which the update concerns also the firmware **F(n)** of the processing unit **P(n).**

In the embodiments of the invention described above, the update is mainly managed by the processing unit **PUn** of the communication unit **110(n),** since most of the main update operations are carried out by the processing unit **PUn.** However, similar considerations applies in case at least some of the update operations are carried out by a different processing unit, such as for example the processing unit **PUe.** For example, the selection of the processing units to be subjected to an update (*i.e.,* the operations comprising the comparison between the version of the installed firmware and the version of the firmware included in the updated packages of the received update distribution **UD**) may be carried out by a processing unit different from the processing unit **PUn,** such as for example the processing unit **PUe.**

Naturally, in order to satisfy local and specific requirements, a person skilled in the art may apply to the solution described above many logical and/or physical modifications and alterations. More specifically, although the present invention has been described with a certain degree of particularity with reference to preferred embodiments thereof, it should be understood that various omissions, substitutions and changes in the form and details as well as other embodiments are possible. In particular, different embodiments of the invention may even be practiced without the specific details set forth in the preceding description for providing a more thorough understanding thereof; on the contrary, well-known features may have been omitted or simplified in order not to encumber the description with unnecessary details. Moreover, it is expressly intended that specific elements and/or method steps described in connection with any disclosed embodiment of the invention may be incorporated in other embodiments.

## Claims

1. Household appliance **(100)** comprising one or more processing units **(PUx, PUx, PUe, PUs)** for controlling electrically and/or electronically controllable components **(120(x), 120(y), 120(e), 120(s))** of the household appliance **(100)** according to a corresponding instructions set **(F(x), F(y), F(e), F(s))** during a first operating mode of the household appliance **(100),** and a communication unit **(PUn)** for allowing a data communication between the household appliance **(100)** and an external server **(140)** through a communication network **(150),** wherein:
- each instructions set **(F(x), F(y), F(e), F(s))** corresponding to a processing unit **(PUx, PUx, PUe, PUs)** is installed at said processing unit;
- the communication unit **(PUn)** is configured for receiving from the external server (**140**) an update data distribution **(UD)** comprising, for each instructions set **(F(x), F(y), F(e), F(s))** installed at the corresponding processing unit, a corresponding update data package comprising a latest version of said instructions set;
- the communication unit **(PUn)** is further configured for carrying out the following operations during a second operating mode of the household appliance (100);
- preventing data communication between the household appliance (**100**) and the external server (140) by disabling said data communication;
- providing to each one among a set of selected processing units **(PUx, PUx, PUe, PUs)** the corresponding update package, each selected processing unit of the set of selected processing units being selected based on a comparison between a version of the instructions set installed at the corresponding processing unit with the latest version of said instructions set included in the corresponding update package;
wherein:
- each selected processing unit **(PUx, PUx, PUe, PUs)** is configured to update the corresponding instructions set installed thereat with the latest version of said instructions set included in the corresponding update package received from the communication unit **(PUn).**

2. The household appliance **(100)** of claim 1, wherein the communication unit **(PUn)** is further configured for carrying out during said second operating mode the following operations for each processing unit **(PUx, PUx, PUe, PUs):**
- comparing a version of the instructions set **(F(x), F(y), F(e), F(s))** installed at said processing unit with the latest version of said instructions set included in the corresponding update package;
- selecting said processing unit **(PUx, PUx, PUe, PUs)** for providing thereto the corresponding update package if the instructions set **(F(x), F(y), F(e), F(s))** installed at said processing unit has a version different from said latest version.

3. The household appliance (**100**) of claim 1 or 2, wherein the communication unit (**PUn**) is configured for receiving from the external server (**140**) said update data distribution (**UD**) during the first operating mode of the household appliance (**100**).

4. The household appliance (**100**) of any of the preceding claims, wherein the communication unit (**PUn**) is configured to verify authenticity and/or integrity of the received update data packages during a package verifying phase of the household appliance occurring:
- after said data communication between the household appliance (**100**) and the external server (**140**) is prevented, and
- before said second operating mode.

5. The household appliance (**100**) of claim 4, wherein the received update data packages are protected by means of digital signature through an asymmetric key, the communication unit (**PUn**) being configured to verify said authenticity and/or integrity of the received update data packages by verifying said digital signature during said package verifying phase of the household appliance through a digital certificate.

6. The household appliance (**100**) of claim 5, wherein the communication unit (**PUn**) is further configured to check the validity of the digital certificate during said package verifying phase of the household appliance.

7. The household appliance (1**0**0) of any of the preceding claims, wherein each processing unit (**PUx, PUx, PUe, PUs**) comprises a respective processing unit memory element (**160(x), 160(y), 160(e), 160(s)**) configured to store said installed instructions set corresponding to said processing unit

8. The household appliance (**100**) of any of the preceding claims, wherein the communication unit (P**U**n) comprises a communication unit memory element (**160(n)**) configured to store the received update data distribution (**UD**) comprising said update data packages.

9. The household appliance (**100**) of claim 8, wherein said communication unit memory element (**160(n)**) is further configured to store a backup data distribution (**BD**) comprising a current version of the instructions set installed at the processing units.

10. The household appliance (**100**) of claim 9, wherein the communication unit (**PUn**) is configured to store into the communication unit memory element (**160(n)**) a new backup data distribution (**BD**) in the place of a previously stored backup data distribution after that each selected processing unit (**PUx**, **PUx**, **PUe**, **PUs**) has updated the corresponding instructions set.

11. The household appliance (**100**) of claim 10, wherein said new backup data distribution (**BD**) corresponds to the received update data distribution (**UD**) comprising said update data packages exploited by the selected processing units for updating the corresponding instructions sets.

12. The household appliance (**100**) of any of the preceding claims, wherein said one or more processing units (**PUx, PUx, PUe, PUs**) are prevented from controlling said electrically and/or electronically controllable components (**120(x), 120(y), 120(e), 120(s)**) of the household appliance (**100**) during said second operating mode.

13. The household appliance (**100**) of any of the preceding claims, wherein the household appliance is configured to switch from the second operating mode to the first operating mode after that each selected processing unit (**PUx, PUx, PUe, PUs)** has updated the corresponding instructions set.

14. The household appliance (**100**) of any if the preceding claims, wherein said household appliance is a selected one among:
- a laundry machine configured to wash and/or dry laundry;
- a dishwasher;
- a oven;
- a refrigerator;
- a cooking hob.

## Patentansprüche

1. Haushaltsgerät (100), umfassend eine oder mehrere Verarbeitungseinheiten (PUx, PUx, PUe, PUs) zum Steuern elektrisch und/oder elektronisch steuerbarer Komponenten (120(x), 120(y), 120(e), 120(s)) des Haushaltsgeräts (100) gemäß einem entsprechenden Befehlssatz (F(x), F(y), F(e), F(s)) während eines ersten Betriebsmodus des Haushaltsgeräts (100), und eine Kommunikationseinheit (PUn) zum Ermöglichen einer Datenkommunikation zwischen dem Haushaltsgerät (100) und einem externen Server (140) über ein Kommunikationsnetzwerk (150), wobei:
- jeder Befehlssatz, der einer Verarbeitungseinheit (PUx, PUx, PUe, PUs) entspricht, auf der jeweiligen Verarbeitungseinheit installiert ist;
- die Kommunikationseinheit (PUn) dazu ausgelegt ist, von dem externen Server (140) eine Aktualisierungsdatenverteilung (UD) zu empfangen, die für jeden auf der entsprechenden Verarbeitungseinheit installierten Befehlssatz (F(x), F(y), F(e), F(s)) ein entsprechendes Aktualisierungsdatenpaket umfasst, das eine neueste Version des jeweiligen Befehlssatzes enthält;
- die Kommunikationseinheit (PUn) ferner dazu ausgelegt ist, während eines zweiten Betriebsmodus des Haushaltsgeräts (100) die folgenden Vorgänge durchzuführen;
- Verhindern der Datenkommunikation zwischen dem Haushaltsgerät (100) und dem externen Server (140) durch Deaktivieren der Datenkommunikation;
- Bereitstellen des entsprechenden Aktualisierungsdatenpakets an jede einzelne Verarbeitungseinheit aus einer Menge ausgewählter Verarbeitungseinheiten (PUx, PUx, PUe, PUs), wobei jede ausgewählte Verarbeitungseinheit der Menge ausgewählter Verarbeitungseinheiten basierend auf einem Vergleich zwischen einer Version des auf der entsprechenden Verarbeitungseinheit installierten Befehlssatzes und der in dem entsprechenden Aktualisierungsdatenpaket enthaltenen neuesten Version des jeweiligen Befehlssatzes ausgewählt wird;
wobei:
- jede ausgewählte Verarbeitungseinheit (PUx, PUx, PUe, PUs) dazu ausgelegt ist, den dort installierten entsprechenden Befehlssatz mit der neuesten Version des jeweiligen Befehlssatzes zu aktualisieren, die in dem entsprechenden Aktualisierungsdatenpaket enthalten ist, das von der Kommunikationseinheit (PUn) empfangen wurde.

2. Haushaltsgerät (100) nach Anspruch 1, wobei die Kommunikationseinheit (PUn) ferner dazu ausgelegt ist, während des zweiten Betriebsmodus für jede Verarbeitungseinheit (PUx, PUx, PUe, PUs) die folgenden Vorgänge durchzuführen:
- Vergleichen einer Version des auf der jeweiligen Verarbeitungseinheit installierten Befehlssatzes (F(x), F(y), F(e), F(s)) mit der in dem entsprechenden Aktualisierungsdatenpaket enthaltenen neuesten Version des jeweiligen Befehlssatzes;
- Auswählen der jeweiligen Verarbeitungseinheit (PUx, PUx, PUe, PUs) zur Bereitstellung des entsprechenden Aktualisierungsdatenpakets, wenn der auf der jeweiligen Verarbeitungseinheit installierte Befehlssatz (F(x), F(y), F(e), F(s)) eine von der neuesten Version abweichende Version aufweist.

3. Haushaltsgerät (100) nach Anspruch 1 oder 2, wobei die Kommunikationseinheit (PUn) dazu ausgelegt ist, die Aktualisierungsdatenverteilung (UD) von dem externen Server (140) während des ersten Betriebsmodus des Haushaltsgeräts (100) zu empfangen.

4. Haushaltsgerät (100) nach einem der vorhergehenden Ansprüche, wobei die Kommunikationseinheit (PUn) dazu ausgelegt ist, die Authentizität und/oder Integrität der empfangenen Aktualisierungsdatenpakete während einer stattfindenden Paketverifizierungsphase des Haushaltsgeräts zu verifizieren:
- nach dem Verhindern der Datenkommunikation zwischen dem Haushaltsgerät (100) und dem externen Server (140), und
- vor dem zweiten Betriebsmodus.

5. Haushaltsgerät (100) nach Anspruch 4, wobei die empfangenen Aktualisierungsdatenpakete mittels einer digitalen Signatur unter Verwendung eines asymmetrischen Schlüssels geschützt sind, wobei die Kommunikationseinheit (PUn) dazu ausgelegt ist, die Authentizität und/oder Integrität der empfangenen Aktualisierungsdatenpakete durch Verifizieren der digitalen Signatur während der Paketverifizierungsphase des Haushaltsgeräts mittels eines digitalen Zertifikats zu verifizieren.

6. Haushaltsgerät (100) nach Anspruch 5, wobei die Kommunikationseinheit (PUn) ferner dazu ausgelegt ist, die Gültigkeit des digitalen Zertifikats während der Paketverifizierungsphase des Haushaltsgeräts zu prüfen.

7. Haushaltsgerät (100) nach einem der vorhergehenden Ansprüche, wobei jede Verarbeitungseinheit (PUx, PUx, PUe, PUs) ein jeweiliges Speicherelement (160(x), 160(y), 160(e), 160(s)) der Verarbeitungseinheit umfasst, das dazu ausgelegt ist, den auf der jeweiligen Verarbeitungseinheit installierten entsprechenden Befehlssatz zu speichern.

8. Haushaltsgerät (100) nach einem der vorhergehenden Ansprüche, wobei die Kommunikationseinheit (PUn) ein Speicherelement (160(n)) der Kommunikationseinheit umfasst, das dazu ausgelegt ist, die empfangene Aktualisierungsdatenverteilung (UD) zu speichern, die die Aktualisierungsdatenpakete umfasst.

9. Haushaltsgerät (100) nach Anspruch 8, wobei das Speicherelement (160(n)) der Kommunikationseinheit ferner dazu ausgelegt ist, eine Sicherungsdatenverteilung (BD) zu speichern, die eine aktuelle Version des auf den Verarbeitungseinheiten installierten jeweiligen Befehlssatzes umfasst.

10. Haushaltsgerät (100) nach Anspruch 9, wobei die Kommunikationseinheit (PUn) dazu ausgelegt ist, in dem Speicherelement (160(n)) der Kommunikationseinheit eine neue Sicherungsdatenverteilung (BD) anstelle einer zuvor gespeicherten Sicherungsdatenverteilung zu speichern, nachdem jede ausgewählte Verarbeitungseinheit (PUx, PUx, PUe, PUs) den entsprechenden Befehlssatz aktualisiert hat.

11. Haushaltsgerät (100) nach Anspruch 10, wobei die neue Sicherungsdatenverteilung (BD) der empfangenen Aktualisierungsdatenverteilung (UD) entspricht, die die Aktualisierungsdatenpakete umfasst, welche von den ausgewählten Verarbeitungseinheiten zur Aktualisierung der entsprechenden Befehlssätze verwendet werden.

12. Haushaltsgerät (100) nach einem der vorhergehenden Ansprüche, wobei die eine oder mehreren Verarbeitungseinheiten (PUx, PUx, PUe, PUs) während des zweiten Betriebsmodus daran gehindert sind, die elektrisch und/oder elektronisch steuerbaren Komponenten (120(x), 120(y), 120(e), 120(s)) des Haushaltsgeräts (100) zu steuern.

13. Haushaltsgerät (100) nach einem der vorhergehenden Ansprüche, wobei das Haushaltsgerät dazu ausgelegt ist, nach der Aktualisierung des entsprechenden Befehlssatzes durch jede ausgewählte Verarbeitungseinheit (PUx, PUx, PUe, PUs) vom zweiten Betriebsmodus in den ersten Betriebsmodus zu wechseln.

14. Haushaltsgerät (100) nach einem der vorhergehenden Ansprüche, wobei das Haushaltsgerät eines ist, das aus der folgenden Gruppe ausgewählt wurde:
- eine Waschmaschine, die dazu ausgelegt ist, Wäsche zu waschen und/oder zu trocknen;
- eine Geschirrspülmaschine;
- ein Ofen;
- ein Kühlschrank;
- ein Kochfeld.

## Revendications

1. Appareil électroménager (100) comprenant une ou plusieurs unités de traitement (PUx, PUx, PUe, PUs) pour commander des composants (120(x), 120(y), 120(e), 120(s)) à commande électrique et/ou électronique de l'appareil électroménager (100) selon un ensemble d'instructions correspondant (F(x), F(y), F(e), F(s)) pendant un premier mode de fonctionnement de l'appareil électroménager (100), et une unité de communication (PUn) pour permettre une communication de données entre l'appareil électroménager (100) et un serveur externe (140) par l'intermédiaire d'un réseau de communication (150), dans lequel :
- chaque ensemble d'instructions (F(x), F(y), F(e), F(s)) correspondant à une unité de traitement (PUx, PUx, PUe, PUs) est installé dans ladite unité de traitement ;
- l'unité de communication (PUn) est configurée pour recevoir depuis le serveur externe (140) une distribution de données de mise à jour (UD) comprenant, pour chaque ensemble d'instructions (F(x), F(y), F(e), F(s)) installé dans l'unité de traitement correspondante, un paquet de données de mise à jour correspondant comprenant une dernière version dudit ensemble d'instructions ;
- l'unité de communication (PUn) est en outre configurée pour réaliser les opérations suivantes au cours d'un second mode de fonctionnement de l'appareil électroménager (100) ;
- l'empêchement de la communication de données entre l'appareil électroménager (100) et le serveur externe (140) par désactivation de ladite communication de données ;
- la fourniture à chacune parmi un ensemble d'unités de traitement (PUx, PUx, PUe, PUs) sélectionnées du paquet de mise à jour correspondant, chaque unité de traitement sélectionnée de l'ensemble d'unités de traitement sélectionnées étant sélectionnée sur la base d'une comparaison entre une version de l'ensemble d'instructions installé dans l'unité de traitement correspondante avec la dernière version dudit ensemble d'instructions compris dans le paquet de mise à jour correspondant ;
dans lequel :
- chaque unité de traitement (PUx, PUx, PUe, PUs) sélectionnée est configurée pour mettre à jour l'ensemble d'instructions correspondant installé dans celle-ci avec la dernière version dudit ensemble d'instructions compris dans le paquet de mise à jour correspondant reçu depuis l'unité de communication (PUn).

2. Appareil électroménager (100) selon la revendication 1, dans lequel l'unité de communication (PUn) est en outre configurée pour exécuter, pendant ledit second mode de fonctionnement, les opérations suivantes pour chaque unité de traitement (PUx, PUx, PUe, PUs) :
- la comparaison d'une version de l'ensemble d'instructions (F(x), F(y), F(e), F(s)) installé dans ladite unité de traitement avec la dernière version dudit ensemble d'instructions compris dans le paquet de mise à jour correspondant ;
- la sélection de ladite unité de traitement (PUx, PUx, PUe, PUs) pour lui fournir le paquet de mise à jour correspondant si l'ensemble d'instructions (F(x), F(y), F(e), F(s)) installé dans ladite unité de traitement a une version différente de ladite dernière version.

3. Appareil électroménager (100) selon la revendication 1 ou 2, dans lequel l'unité de communication (PUn) est configurée pour recevoir depuis le serveur externe (140) ladite distribution de données de mise à jour (UD) pendant le premier mode de fonctionnement de l'appareil électroménager (100).

4. Appareil électroménager (100) selon l'une quelconque des revendications précédentes, dans lequel l'unité de communication (PUn) est configurée pour vérifier l'authenticité et/ou l'intégrité des paquets de données de mise à jour reçus pendant une phase de vérification de paquets de l'appareil électroménager se produisant :
- après avoir empêché ladite communication de données entre l'appareil électroménager (100) et le serveur externe (140), et
- avant ledit second mode de fonctionnement.

5. Appareil électroménager (100) selon la revendication 4, dans lequel les paquets de données de mise à jour reçus sont protégés au moyen d'une signature numérique par l'intermédiaire d'une clé asymétrique, l'unité de communication (PUn) étant configurée pour vérifier ladite authenticité et/ou ladite intégrité des paquets de données de mise à jour reçus en vérifiant ladite signature numérique pendant ladite phase de vérification de paquets de l'appareil électroménager par l'intermédiaire d'un certificat numérique.

6. Appareil électroménager (100) selon la revendication 5, dans lequel l'unité de communication (PUn) est en outre configurée pour vérifier la validité du certificat numérique pendant ladite phase de vérification de paquets de l'appareil électroménager.

7. Appareil électroménager (100) selon l'une quelconque des revendications précédentes, dans lequel chaque unité de traitement (PUx, PUx, PUe, PUs) comprend un élément de mémoire d'unité de traitement respectif (160(x), 160(y), 160(e), 160(s)) configuré pour stocker ledit ensemble d'instructions installé correspondant à ladite unité de traitement.

8. Appareil électroménager (100) selon l'une quelconque des revendications précédentes, dans lequel l'unité de communication (PUn) comprend un élément de mémoire d'unité de communication (160(n)) configuré pour stocker la distribution de données de mise à jour reçue (UD) comprenant lesdits paquets de données de mise à jour.

9. Appareil électroménager (100) selon la revendication 8, dans lequel ledit élément de mémoire d'unité de communication (160(n)) est en outre configuré pour stocker une distribution de données de sauvegarde (BD) comprenant une version courante de l'ensemble d'instructions installé dans les unités de traitement.

10. Appareil électroménager (100) selon la revendication 9, dans lequel l'unité de communication (PUn) est configurée pour stocker dans l'élément de mémoire d'unité de communication (160(n)) une nouvelle distribution de données de sauvegarde (BD) à la place d'une distribution de données de sauvegarde préalablement stockée après que chaque unité de traitement sélectionnée (PUx, PUx, PUe, PUs) a mis à jour l'ensemble d'instructions correspondant.

11. Appareil électroménager (100) selon la revendication 10, dans lequel ladite nouvelle distribution de données de sauvegarde (BD) correspond à la distribution de données de mise à jour reçue (UD) comprenant lesdits paquets de données de mise à jour exploités par les unités de traitement sélectionnées pour mettre à jour les ensembles d'instructions correspondants.

12. Appareil électroménager (100) selon l'une quelconque des revendications précédentes, dans lequel lesdites une ou plusieurs unités de traitement (PUx, PUx, PUe, PUs) sont empêchées de commander lesdits composants (120(x), 120(y), 120(e), 120(s)) à commande électrique et/ou électronique de l'appareil électroménager (100) pendant ledit second mode de fonctionnement.

13. Appareil électroménager (100) selon l'une quelconque des revendications précédentes, dans lequel l'appareil électroménager est configuré pour passer du second mode de fonctionnement au premier mode de fonctionnement après que chaque unité de traitement sélectionnée (PUx, PUx, PUe, PUs) a mis à jour l'ensemble d'instructions correspondant.

14. Appareil électroménager (100) selon l'une quelconque des revendications précédentes, dans lequel ledit appareil électroménager est choisi parmi :
- une machine à laver configurée pour laver et/ou sécher le linge ;
- un lave-vaisselle ;
- un four ;
- un réfrigérateur ;
- une plaque de cuisson.
